**Europäisches Patentamt**

**European Patent Office**

**Office européen des brevets**

(19)

(11) Publication number: **0 223 342
B1**

(12) # EUROPEAN PATENT SPECIFICATION

(45) Date of publication of the patent specification:
01.08.90

(51) Int. Cl.⁵: **G21C 3/32**

(21) Application number: **86306631.2**

(22) Date of filing: **28.08.86**

(54) **Locking-tube removal and insertion fixture for use with reconstitutable nuclear fuel assemblies.**

(30) Priority: **05.09.85 US 772985**

(43) Date of publication of application:
**27.05.87 Bulletin 87/22**

(45) Publication of the grant of the patent:
**01.08.90 Bulletin 90/31**

(84) Designated Contracting States:
**BE DE FR GB IT SE**

(56) References cited:
**EP-A- 0 109 902
EP-A- 0 182 149
EP-A- 0 187 651
EP-A- 0 189 797
US-A- 4 358 421**

(73) Proprietor: **WESTINGHOUSE ELECTRIC
CORPORATION, Westinghouse Building Gateway
Center, Pittsburgh Pennsylvania 15235(US)**

(72) Inventor: **Shallenberger, John Milton, 120 W. Chapel
Ridge Road, Pittsburgh Pennsylvania(US)**
Inventor: **Ferlan, Steph Joseph, 895 Rita Drive,
Pittsburgh Pennsylvania(US)**

(74) Representative: **van Berlyn, Ronald Gilbert, 23, Centre
Heights, London, NW3 6JG(GB)**

## Description

The present invention relates generally to fuel assemblies for nuclear reactors and, more particularly, to a fixture for removing and inserting locking tubes from and into, respectively, locking positions in the top nozzle of a reconstitutable fuel assembly.

As known in the art, a reconstitutable fuel assembly is one which has an upper end structure, or top nozzle, that can be removed when it is desired to gain access to the fuel rods in the fuel assembly for the purpose of inspection and/or replacement, and can be remounted when the fuel-rod inspection and/or replacement, i.e. the reconstitution of the fuel assembly, has been completed. The top nozzle of a typical reconstitutable fuel assembly may be mounted on an attached to upper end portions of control-rod guide thimbles of the fuel assemblies in a manner such as disclosed in Applicant's EPC Publication No. 0 140 588, for example. As described therein, the guide-thimble end portions on which the top nozzle is mounted extend into control-rod passageways formed through the adapter plate of the top nozzle and there are attached to the top nozzle by means of annular bulges formed circumferentially on the guide-thimble end portions and lodged in annular grooves formed in the peripheral walls of the respective passageways in the top nozzle adapter plate. The guide-thimble end portions are axially slotted so as to enable them to be resiliently compressed and thereby to enable the guide-thimble end portions with the annular bulges thereon to be inserted into and withdrawn from the passageways. In order to secure the top nozzle against accidental detachment from the guide-thimble end portions, the guide-thimble end portions have inserted therein locking tubes which prevent compression of the guide-thimble end portions and, consequently, dislodgement of their annular bulges from the annular grooves in the walls of the passageways. These locking tubes are, in turn, secured against undesirable displacement thereof from their locking positions by having peripheral portions thereof bulged out, after insertion of the locking tubes to their locking positions, into mating engagement with the annular concavities defined on the inside of the circumferential bulges on the guide-thimble end portions.

When such fuel assembly is to be reconstituted, it is removed from the reactor core and placed in a submerged work station where its top nozzle is removed with the aid of remotely operated equipment. In order that the top nozzle can be removed, it is necessary first to pull the locking tubes from their locking positions within the guide-thimble end portions, either individually as by means of a tool such as described in EP-A 182 149, or all together as by means of a fixture such as described in EP-A 189 797. After the removal of the locking tubes, the top nozzle is lifted and removed from the fuel assembly, e.g. through use of a fixture such disclosed in Applicant's EPC publication No. 0 183 068.

Locking tubes which after insertion to their locking positions have peripheral portions thereof bulged out into mating engagement with the associated guide-thimble end portions tend to become deformed in their bulged-out regions upon being forcefully pulled from their locking positions, in which event they must be discarded and replaced with new locking tubes upon reconstitution of the fuel assembly. This has certain drawbacks insofar as it requires provision to be made for the disposal of the irradiated and discarded locking tubes, requires a large inventory of new locking tubes to be maintained, and requires the formation and inspection of bulges on the new and freshly installed locking tubes. In order to avoid these drawbacks, it has been proposed to employ locking tubes especially designed for re-use. Such reusable locking tubes are disclosed in EP-A 196 916, according to which each locking tube consists of a somewhat elastically deformable tubular body having dimples for securing the locking tube against axial displacement from its locking position preformed thereon at diametrically opposed locations and shaped in a manner causing the material of the dimples themselves to resist yielding and dimensional change during insertion and removal of the locking tube to and from its locking position within a guide-thimble end portion. A locking tube thus designed can be withdrawn from and subsequently reinstalled in its locking position without sustaining deformation damage.

It is the principal object of the invention to provide a locking-tube removal and insertion fixture which is especially well suited for use with re-usable locking tubes.

The invention accordingly resides in a fixture for removing and inserting locking tubes respectively from and into locking positions within end portions of guide thimbles inserted in passageways formed through the adapter plate of a top nozzle of a reconstitutable nuclear fuel assembly, characterized by (a) a first traveling plate having thereon flexure tubes which project from the traveling plate in parallel with respect to each other and which are arrayed as said passageways in the adapter plate, each of said flexure tubes being insertable through one of the locking tubes and resiliently expandable into gripping relationship therewith; (b) a second traveling plate disposed face-to-face with respect to said first traveling plate and carrying actuating rods which extend from said second traveling plate and extend movably through the respective flexure tubes on the first traveling plate; (c) aligning means for guiding said first and second traveling plates for movement away from and toward each other between two limit positions, each of said actuating rods including a spreader portion cooperable with the associated flexure tube to effect resilient expansion thereof into said gripping relationship upon movement of the traveling plates to one of said limit positions, and to permit collapse of the associated flexure tube out of said gripping relationship upon movement of the traveling plates to the other limit position; (d) biasing means urging said traveling plates to move to said one limit position; (e) interlocking means cooperable with the traveling plates and operable to move the latter to, and to releasably lock them in, said other limit position against the action of said biasing means; and (f) mounting means comprising a mounting plate and a shaft rotatably supported therefrom, said mounting plate including means for mounting and stationarily positioning the fixture upon said top nozzle in a manner such that the flexure tubes and the actuating rods therein are axially aligned with the respective passageways of said adapter plate, and said shaft being operatively connected to one of the traveling plates so as, when rotated in one direction, to move both traveling plates toward said adapter plate and thereby insert the flexure tubes together with the actuating rods therein into the thimble-guide end portions within the respective passageways, and, when rotated in the opposite direction, to move both traveling plates away from said adapter plate a distance sufficient to completely withdraw the flexure tubes together with the actuating rods therein from said guide-thimble end portions and passageways.

This fixture permits a full complement of locking tubes to be installed or removed simultaneously, and permits a full complement of re-usable locking tubes to be removed simultaneously, then to be held properly arrayed and accurately aligned within the confines of the top nozzle for reinsertion, and eventually to be reinserted in their proper locking positions. Such withdrawal or reinsertion of a full complement of locking tubes itself requires very little time, namely, about from one to two minutes.

A locking-tube removal operation utilizing the fixture according to the invention involves the following sequence of steps: (1) With the two traveling plates locked in said other limit position in which the flexure tubes are collapsed, and with both traveling plates retracted toward the mounting plate, the first step consists in lowering the fixture toward the top nozzle so as to cause said mounting means to properly position the fixture thereon, i.e. to position it such that the flexure tubes (and consequently the actuating rods therein) are accurately aligned with the respective passageways in the top-nozzle adapter plate; (2) rotating the shaft on the mounting plate in said one direction to lower both traveling plates, still locked in said other limit position, toward the adapter plate until the lower, i.e. said first, one of the traveling plates seats upon the adapter plate, at which point the flexure tubes together with the actuating rods will be in their proper positions within the locking tubes to be removed; (3) operating the interlocking means to unlock or release the traveling plates to the action of the biasing means; and (4) rotating the shaft on the mounting plate in said opposite direction so as initially to enable the biasing means to drive the upper, i.e. said second, traveling plate to said one limit position and thus cause the spreader portions of the actuating rods to expand the associated flexure tubes into gripping relationship with the respective locking tubes, and continuing said rotation of the shaft in said opposite direction to cause both traveling plates to move away from the adapter plate until all flexure tubes, together with the locking tubes held captive thereon and the actuating rods extending therethrough, are withdrawn from and clear of the passageways in the top-nozzle adapter plate.

The top nozzle can now be lifted and removed from the guide-thimble end portions. When reconstitution of the fuel assembly is completed, the top nozzle is remounted on the guide-thimble end portions and the previously withdrawn locking tubes, still held captive on the various flexure tubes, are re-inserted in their locking positions. This re-insertion of the locking tubes involves the following sequence of steps: (1) rotating the shaft on the mounting plate in said one direction to lower both traveling plates and thereby insert the flexure tubes together with the locking tubes thereon into the associated guide-thimble end portions within the respective top-nozzle passageways, and continuing this shaft rotation until the lower, i.e. said first, traveling plate seats upon the adapter plate of the top nozzle, at which point the locking tubes are in their proper locking positions; (2) continuing said shaft rotation to move the upper, i.e. said second, traveling plate against the action of the biasing means toward the now stationary lower traveling plate and thus to said other limit position, thereby to enable the flexure tubes to collapse and hence to release the locking tubes; (3) operating the interlocking means to lock the traveling plates in said other limit positions; and (4) rotating the shaft on the mounting plate in said opposite direction to move both traveling plates away from the adapter plate of the top nozzle until the flexure tubes and the actuating rods therein are fully withdrawn from the adapter-plate passageways. The locking-tube removal and insertion fixture can now be dismounted and removed from the top nozzle, whereupon the reconstituted fuel assembly, with its top nozzle in place and firmly re-attached to the guide thimbles, is ready to be returned to service.

A preferred embodiment of the invention will now be described, by way of example only, with reference to the accompanying drawings, in which:

Fig. 1 is a fragmentary side-elevational view of the upper end of a reconstitutable fuel assembly, and of the fixture, embodying the invention, for removing and re-inserting re-usable locking tubes associated with the top nozzle of the assembly;

Fig. 2 is a top plan view of the fixture as seen along line 2-2 of Fig. 1;

Figs. 3 and 4 are fragmentary side-elevational views similar to Fig. 1 but showing the fixture in different stages of operation, and

Figs. 5 to 8 are enlarged, fragmentary, sectional views of an actuating rod associated with one of a plurality of flexure tubes of the fixture and shown in different operating positions in the various Figs. 5 to 8.

In the following description, like reference characters designate like or corresponding parts throughout the several views, and terms such as "forward", "rearward", "left", "right", "upwardly", "downwardly", and the like, are employed as words of convenience not to be construed as limiting terms.

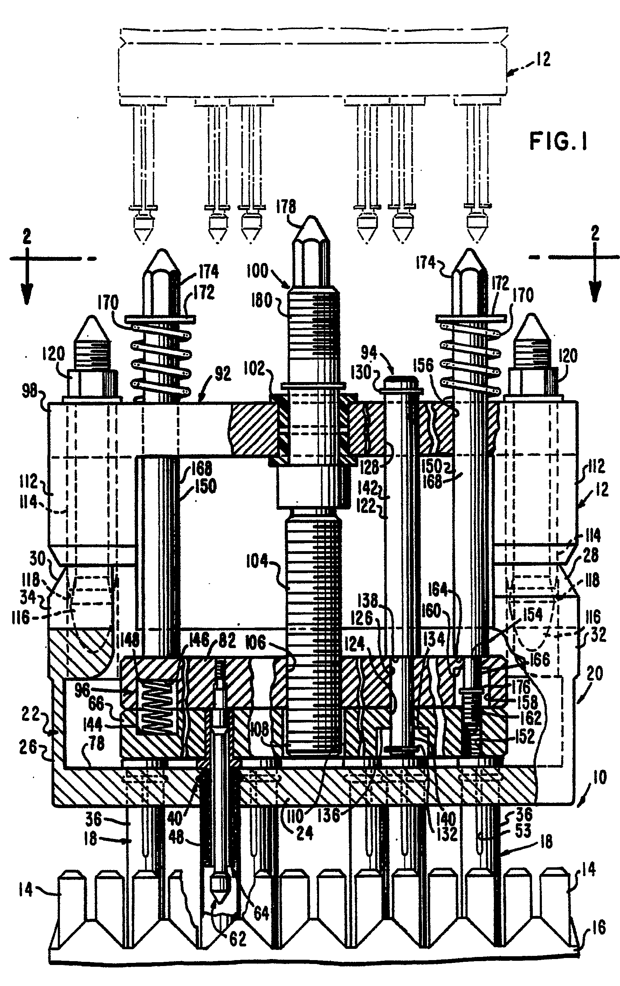

Referring now to the drawings, and particularly to Fig. 1, there is shown an upper end portion of a reconstitutable fuel assembly generally designated 10, and the locking-tube insertion and removal fixture embodying the invention, generally designated with numeral 12.

Basically, the fuel assembly 10, being of conventional construction, includes an array of fuel rods 14 held in spaced relationship with respect to one another by transverse support grids 16 (only one is shown) spaced along the fuel assembly length. Each fuel rod 14 contains nuclear fuel pellets (not shown) composed of fissile material, and is sealed at its opposite ends. When in use in a reactor core, liquid moderator/coolant such as water, or water containing boron, is pumped upwardly through the fuel assemblies of the core in order to extract therefrom heat for the production of useful work.

The reconstitutable fuel assembly 10 includes also several control-rod guide tubes or thimbles 18 along which grids 16 are spaced apart and to which they are attached. The guide thimbles 18 extend at their opposite ends a short distance beyond the corresponding ends of the fuel rods 14 and are attached to a bottom nozzle (not shown) and a top nozzle 20, respectively.

To control the fission process, control rods (not shown) are reciprocally movable in the guide thimbles 18 by means of a rod-cluster control mechanism (not shown) connected to the control rods at the top nozzle 20, as well known in the art.

As illustrated in Fig. 1, the top nozzle 20 comprises a housing 22 having a lower or adapter plate 24 with four peripheral, interconnected upstanding side walls 26 having raised sets of pads 28, 30 (only one pad in each set is shown) disposed at the respective diagonal corners 32, 34 of the housing 22. The control rod guide thimbles 18 have upper end portions 36 thereof coaxially positioned within control rod passageways 38 formed through the adapter plate 24 of the top nozzle 20.

In order to afford access to the fuel rods 14, the adapter plate 24 of the top nozzle 20 is removably connected to the upper end portions 36 of the guide thimbles 18 by attaching structure generally designated 40. As seen from Figs. 1, 3 and 4, and especially from Figs, 5 to 8, the top nozzle attaching structure 40 of the reconstitutable fuel assembly 10 includes a plurality of outer sockets 42 (only one is shown) each defined in the top nozzle adapter plate 24 by one of the passageways 38 and with an annular groove 44 formed circumferentially in the inner wall thereof, a plurality of inner sockets 46 (only one is shown) each defined by the upper end portion 36 of the respective guide thimble 18, and a plurality of removable and re-usable locking tubes 48 (only one is shown) inserted into the respective inner sockets 46 so as to maintain them in locking engagement with the outer sockets 42 associated therewith.

Each inner socket 46 has thereon an annular bulge 50 formed circumferentially on the tubular upper end portion 36 of the associated guide thimble 18 only a short distance below the upper edge 52 thereof. A plurality of elongate axial slots 53 likewise formed in the upper end portion 36 of the guide thimble 18 permit elastic collapse of the slotted end portion to a compressed position so as to allow the annular bulge 50 thereon to be inserted into and removed from the annular groove 44 via the associated passageway 38 of the adapter plate 24. The annular bulge 50 mates with the annular groove 44 when the upper end portion 36 of the guide thimble is inserted in the passageway 38 and has assumed expanded position.

Finally, each re-usable locking tube 48 is inserted, from above the top nozzle 20, into its locking position within the upper end portion 36 of the respective guide thimble 18 forming one of the inner sockets 46. When in its locking position, the locking tube 48 retains the bulge 50 of the inner socket 46 in engagement with the annular groove 44 of the associated outer socket 42, thus preventing the inner socket 46 from being compressed and withdrawn from the outer socket 42.

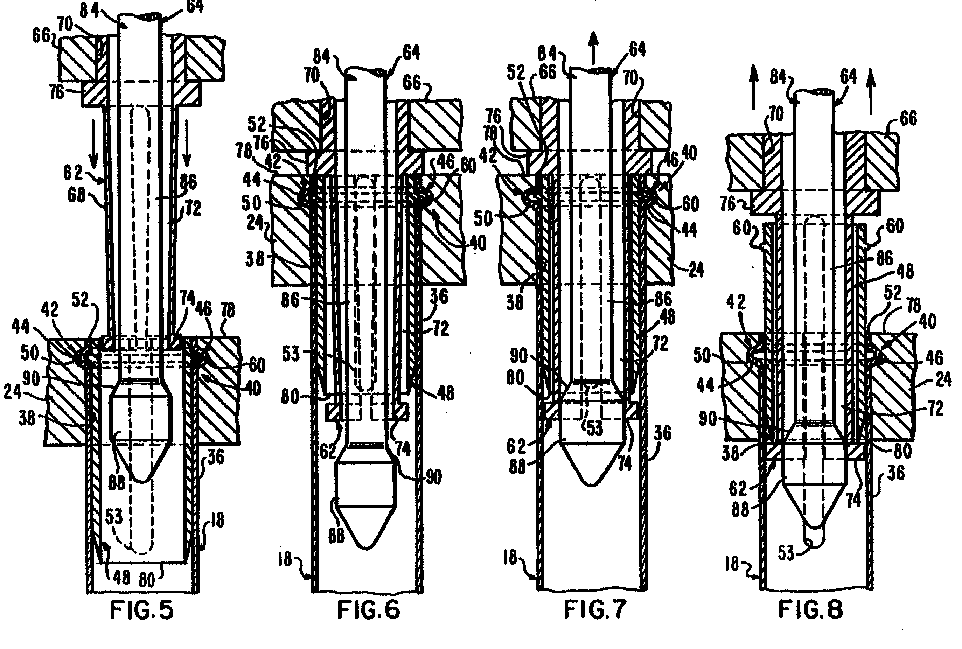

Each locking tube 48 has at least two small dimples 60 (Figs. 5 to 8) preformed on the exterior thereof during manufacture, i.e. prior to insertion of the tube 48 to its locking position. The dimples 60 may be preformed by any suitable method, such as by die-forming, by being coined or by spot welding, and they are of generally pyramidal shape such that the metal which forms the dimples will resist yielding and dimensional change, regardless of the number of times the locking tube 48 is inserted to and removed from its locking position, so that the locking tube as a whole rather than the dimples 60, will yield and then spring back to its original shape.

The dimples 60 are so located on the exterior of the locking tube 48 as to have their outer tips diametrically opposite each other and spaced apart a distance greater than the inside diameter of the inner socket 46 at the upper end 52 thereof, such that when the locking tube is inserted to the locking position, as shown in Figs. 5 to 7, its dimples extend into the annular groove formed on the concave side of the bulge 50 on the guide-thimble end portion 36, which bulge 50 in turn is mating with the annular groove 44 in the peripheral wall of the passageway 38. In this manner, the dimples 60 provide a positive interference fit between the locking tube 48 and the guide-thimble end portion 36 which will prevent inadvertent withdrawal of the locking tube 48 from its locking position.

### Fixture for Inserting and Removing Re-usable Locking Tubes

For effectuating inspection, removal, replacement and/or rearrangement of fuel rods 14 contained in the reconstitutable fuel assembly 10, the assembly must be removed from the reactor core and lowered into a work station (not shown) by means of a standard fuel assembly handling tool (not shown). In the work station, the fuel assembly is submerged in coolant and thus maintenance operations are performed through manipulation of remotely controlled submersible equipment. One component of such equipment is the fixture 12 of the present invention for removing and reinserting the re-usable locking tube 48 as first and third steps in removing and replacing the top nozzle 20. Another component of such equipment is the fixture (not shown) embodying the invention disclosed in Applicant's EPC publication No. 0 183 068, which is employed, after removal of the locking tubes by means of the fixture of the present invention, for removing the top nozzle 20 of the reconstitutable fuel assembly 10 in a second step, and is employed again, after the locking tubes have been reinserted in the third step, for replacing the top nozzle 20 on the guide thimbles 18.

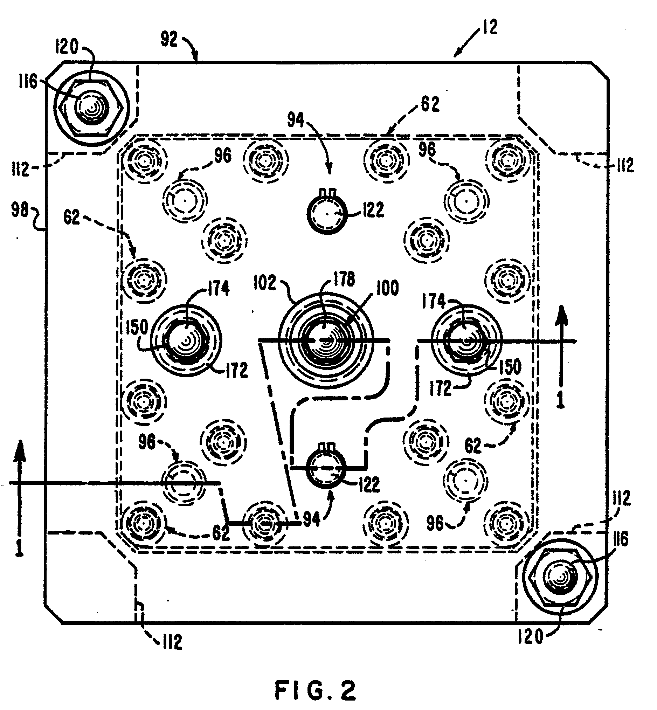

Referring now to Figs. 1 to 8, the fixture 12 for inserting and removing the re-usable locking tubes 48 basically includes locking-tube engaging means generally designated 62, and actuating means generally indicated 64.

The locking-tube engaging means 62 includes a lower traveling plate 66, and a plurality of hollow flexure tubes 68 (see Figs. 5-8) attached to and extending downward from the lower traveling plate 66. The lower traveling plate 66 has a generally square configuration and has formed therein a plurality of openings 70 arranged in a pattern which matches that of the guide thimbles 18 and of the adapter-plate passageways 38 of the fuel assembly 10. Each flexure tube 68 is anchored in one of the openings 70 extending through the lower plate 66 and has a lower axially segmented sleeve portion 72 which terminates in a lower segmented rim 74. Above its lower segmented portion 72, the flexure tube 68 has an annular exterior shoulder 76 which serves as a stop cooperating with an upper surface portion 78 of the adapter plate 24 such that, when engaged therewith, the segmented rim 74 at the lower end of the flexure tube 68 is positioned just below a lower end 80 of the locking tube 48, as shown in Figs. 1 and 6. The segmented sleeve portion 72 is normally in a circumferentially collapsed condition in which its segmented rim 74 has an outside diameter less than the inside diameter of the re-usable locking tube 48 (see Fig. 6), thereby enabling the flexure tube 68 to be readily inserted into and withdrawn from the locking tube 48.

The actuating means 64 includes an upper traveling plate 82 and a plurality of elongate solid actuating rods 84 (see Fig. 5) attached to and extending downward from the upper traveling plate 82. The upper traveling plate 82 has a generally square configuration matching that of the lower traveling plate 66, and it has a plurality of tapped holes arranged in a pattern which matches that of the openings 70 in the lower traveling plate 66. Each actuating rod 84 is threadedly anchored in one of the tapped holes 86 of the upper traveling plate and has a shaft portion 86 which extends through one of the flexure tubes 68 and terminates at its lower end in an enlarged nose 88 of conical configuration.

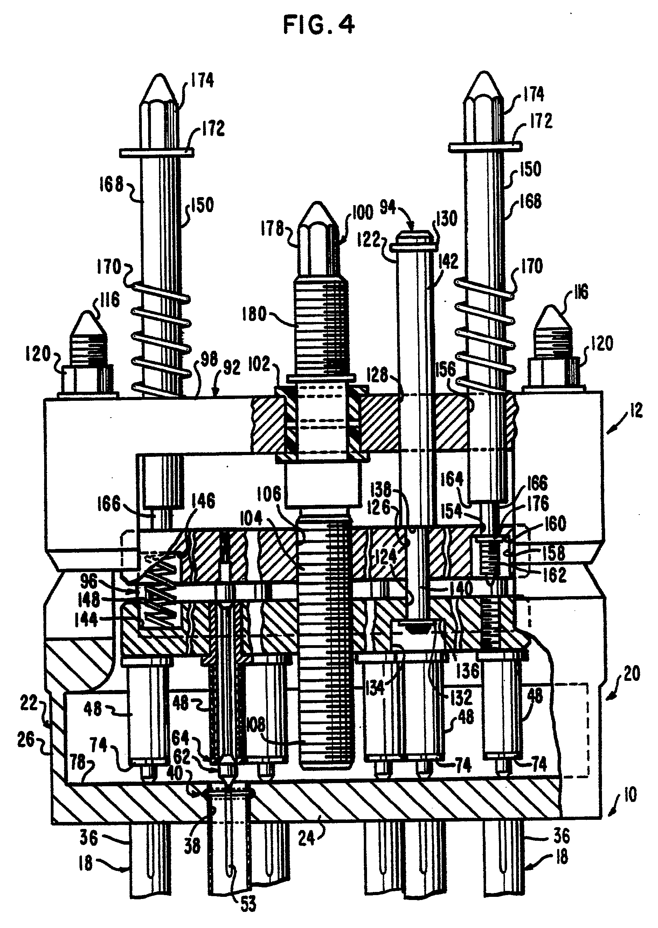

The length of each actuating rod 84 relative to that of the associated flexure tube 68 is such that when the upper and lower traveling plates 82, 66 are engaged with one another, as seen in Fig. 1, the enlarged nose 88 of the rod 84 is displaced a short distance below the segmented rim 74 of the tube 68 (see also Figs. 5 and 6). The outside diameter of the enlarged nose 88 of the actuating rod 84 is larger than the inside diameter of the segmented rim 74 of the flexure tube 68 such that, when the upper traveling plate 82 is moved upwardly away from the lower traveling plate 66 a distance of, say, about 8 mm, for example, the upper conically tapered surface 90 of the enlarged nose 88 engages the segmented rim 74 and circumferentially expands it as the nose is being forced into the flexure tube 68, as seen from Fig. 7. In its expanded condition, the rim 74 has an outside diameter greater than the inside diameter of the locking tube 48 so that continued upward movement of the plates 82, 66 away from the adapter plate 24, as seen from Fig. 4, will cause the rim 74 to engage the lower end of the locking tube 48 and to withdraw the tube 48 from its locking position (see also Fig. 8). Conversely, when the upper traveling plate 82 is moved toward the lower traveling plate 66, the enlarged nose 88 is disengaged and withdrawn from the segmented rim 74, thereby allowing the rim 74 to contract to its normal collapsed condition.

The fixture 12 also includes mounting means, aligning means and biasing means, generally designated 92, 94 and 96, respectively. The mounting means 92 comprises a mounting plate 98, and a central shaft 100 rotatably journalled in a bushing 102 in the mounting plate 98. The lower portion 104 of the central shaft 100 is externally threaded and threadably engaged in a center tapped hole 106 in the upper traveling plate 82. The lower end 108 of the threaded portion 104 of the central shaft 100 extends through a bore 110 in the center of the lower traveling plate 66. Thus, the central shaft 100 supports the upper traveling plate 82 but not the lower traveling plate 66 from the mounting plate 98.

The mounting plate 98 has the general configuration of a square approximately equal in size to the cross-section of the fuel-assembly top nozzle 10. Four corner legs 112 extending downward from the mounting plate 98 are adapted to seat upon the corner pads 28, 30 of the top nozzle 20 so as to stationarily support the mounting plate 98 on the top nozzle while operations are performed to remove and reinsert the re-usable locking tubes 48, as described later herein. Two diagonal ones of the four corner legs 112 of the mounting plate 98 and one pair of pads 28 of the top nozzle 20 includes means for releasably locking the mounting plate 98 to the top nozzle 20. These releasable locking means include a pair of hollow, expandable split sleeves 114 fixedly mounted in the respective corner legs 112 of the diagonal pair, and a pair of wedge pins 116 mounted for axial movement in the respective split sleeves 114. The sleeves 114 are adapted for insertion within respective bores 118 formed in the associated pair of diagonal corner pads 28 of the top nozzle housing 22. The wedge pins 116 have on threaded upper end portions thereof nuts 120 which are engageable with a suitable long-handled socket tool (not shown) for rotating the nuts 120 so as to move the wedge pins 116 axially in and out of the sleeves 114, depending upon the direction in which the nuts are being rotated. Rotation of the nuts 120 in one direction will cause the wedge pins 116 to spread the sleeves 114 into frictional engagement with the side walls of the bores 118 of the corner pads 28, thereby to fixedly lock the mounting plate 98 onto the top nozzle housing 22, and rotation of the nuts 120 in the opposite direction will enable the expanded sleeves 114 to resiliently contract and thereby to release the mounting plate 98 for removal from the top nozzle.

The aligning means 94 of the fixture 12 include a pair of elongate pins 122 which extend between and interconnect the stationary mounting plate 98 and the lower and upper traveling plates 66, 82, each of the pins 122 extending through axially aligned holes 124, 126, 128 formed in the plates 66, 82, 98, respectively. Each pin 122 has upper and lower retaining rings 130, 132 disposed thereon adjacent its opposite ends to prevent the pins' ends from slipping through the holes 124, 128 in the lower and stationary plates 66, 98. Each of the holes 124 through the lower traveling plate 66 has a larger-diameter counterbore 134 which is formed into the plate 66 from the lower side thereof and defines a ledge 136. Moreover, each of the pins 122 has a shoulder 138 defined thereon at the transition between a smaller-diameter lower pin portion 140, which extends through the holes 124, 126 of the lower and upper traveling plates 66, 82, and a larger-diameter upper pin portion 142 which extends from the upper traveling plate 82 upwards and through the hole 128 in the mounting plate 98. Thus, the aligning pins 122 not only keep the plates 66, 82, 98 aligned with one another but their lower retaining rings 132, cooperating with the lower-plate ledges 136, and their shoulders 138 cooperating with the upper surface of the upper plate 82, also define the maximum limit of movement of the upper traveling plate 82 away from the lower traveling plate 66. This maximum limit corresponds to the distance which the actuating rods 84 must be moved in order to pull their enlarged noses 88 into the associated flexure tubes 68 sufficiently to expand the segmented rims 74 of the tubes 68 into underlying relationship with respect to the lower ends 80 of the locking tubes 48.

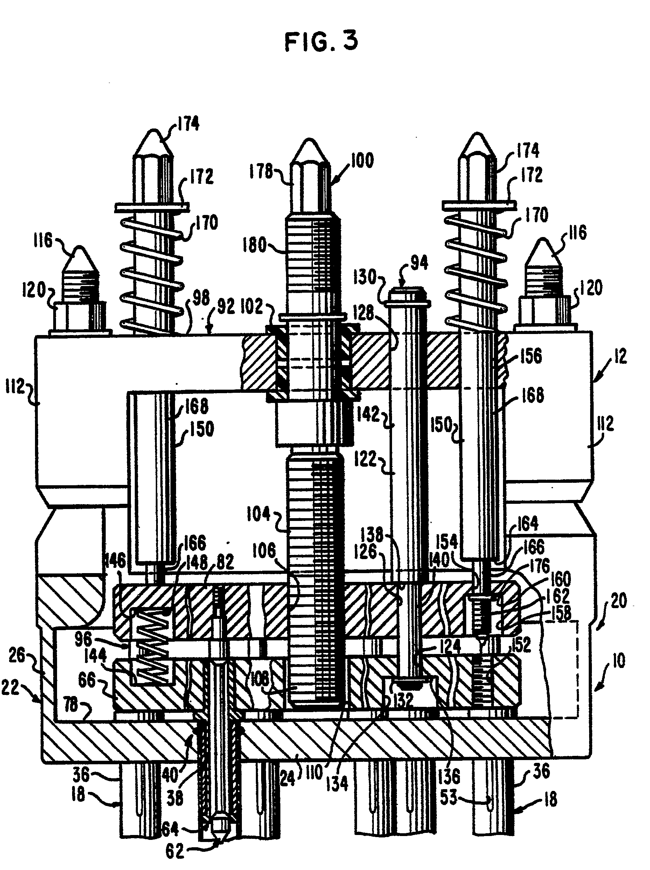

The biasing means 96 of the fixture 12 comprise a plurality of coil springs 148 disposed between the lower and upper traveling plates 66, 82, each coil spring 148 being seated at its opposite ends in a pair of pockets or recesses 144, 146 formed in the mutually facing surfaces of the traveling plates 66, 82. The coil springs 148 are interposed between the plates 66, 82 under partial compression and are strong enough to assure positive separation of the plates 66, 82 to the aforesaid maximum limit (Fig. 3) while yieldingly permitting movement of the plates toward and into abutment with each other (see Fig. 1).

Additionally, the fixture 12 includes a pair of spring-loaded shafts 150 which extend between the mounting plate 98 and the traveling plates 66, 82. For each of the shafts 150, the plates 66, 82 and 98 have axially aligned holes 152, 154 and 156, respectively, the hole 154 in the upper traveling plate 82 having a larger-diameter counterbore 158 which opens toward the lower traveling plate 66 and defines a ledge 160, and the hole 152 in the lower traveling plate 66 being tapped. Each of the shafts 150 has a main or larger-diameter upper portion 168 which is slideably and rotatably received in the hole 156 of the mounting plate 98 and, at its lower end, defines a shoulder 164 bearing against the upper traveling plate 82, and each shaft 150 has further a smaller-diameter lower portion 166 which extends downward from the larger-diameter portion and has an upper part thereof slideably and rotatably received in the hole 154 of the upper traveling plate 82 and has an externally threaded lower end part 162 thereof threadedly engageable with the tapped hole 152 of the lower traveling plate 66.

Each shaft 150 has associated therewith a coil spring 170 which is disposed about a portion of the shaft projecting above the mounting plate 98 and is held under partial compression between the mounting plate 98 and an annular spring seat 172 on the shaft 150 so as to bias the latter upwards. On its smaller-diameter portion 166, the shaft 150 has an annular retainer 176 which cooperates with the ledge 160 in the associated counterbore 158 of the upper traveling plate 82 to limit upward movement of the shaft 150 under the action of the spring 170 but still to permit disengagement of the treaded lower end part 162 of the shaft 150 from the tapped hole 152 of the lower traveling plate 66 when the two traveling plates 66 and 82 are abutting each other. Above its spring seat 172, each shaft 150 has a hex head 174 for receiving a suitable long-handled tool (not shown) which is operable to force the shaft 150 downward against the action of its bias spring 170, and also to rotate the shaft 150 into and from threaded engagement with the tapped hole 152 of the lower traveling plate 66.

The procedure of removing and reinstalling the re-usable locking tubes 48 is as follows.

Removal of the locking tubes 48 from the removable top nozzle 20 for the purpose of reconstituting the fuel assembly 10 is initiated by lowering the fixture 12, as indicated in phantom in Fig. 1, toward the top nozzle while the fuel assembly is housed in a submerged work station. The lowering of the fixture 12 is accomplished by means of long-handled tool (not shown) threadedly connected to a threaded section 180 of the central shaft 100 and operated to guide the wedge pins 116 into the bores 118 of the top-nozzle housing 22. It should be noted that, during this initial phase of the removal procedure, the upper and lower plates 82, 66 are joined together, as seen from Fig. 1, by the shafts 150 having their lower end parts 162 threadedly engaged in the tapped holes 152 of the lower traveling plate 66. Once the mounting plate 98 is resting upon the top nozzle 20, another suitable long-handled socket tool is employed to turn the nuts 120 on wedge pins 116 so as to lock the fixture 12 to the top nozzle, as described hereinbefore.

Next, a long-handled socket tool (not shown) is engaged with a hex head 178 of the central shaft 100 and operated to rotate the latter such as to lower the joined traveling plates 82, 66 until the shoulders 76 (see Fig. 6) on the flexure tubes 68 are seated upon the adapter plate 24, as seen in Fig. 1. In this position, the flexure tubes 68 on the lower plate 66 and the actuating rods 84 on the upper plate 82 extend through the re-usable locking tubes 48, and the segmented bottom rims 74 of the flexure tubes 68 are located at a level below the lower ends 80 of the locking tubes 48 but still in their collapsed condition since the enlarged noses 88 of the actuating rods 84 are outside and below the rims 74 (see also Fig. 6).

Now, the same or a similar long-handled socket tool (not shown) is engaged with the hex head 174 first of the one and then of the spring-loaded shafts 150, and with each is used to rotate the respective shaft 150 so as to disengage its threaded lower end part 162 from the associated tapped hole 152 of the lower plate 66, thereby freeing the shaft 150 to the action of its spring 170 which will raise the shaft 150 to its upper limit determined by engagement of its retainer 176 with the ledge 160. Next, the first-mentioned long-handled socket tool (not shown) is re-engaged with the hex head 178 on the central shaft 100 and operated to rotate the latter in a direction causing the upper plate 82 together with the actuating rods 84 thereon to be lifted away from the lower plate 66 (the springs 148 between the plates 66, 82 assist in this movement), whereby the enlarged noses 88 of the rods 84 are pulled into the lower ends of the flexure tubes 68 and the rims 74 of the latter are expanded into underlying relationships with respect to the lower ends 80 of the locking tubes 48, as seen from Figs. 3 and 7. With the rims 74 thus positioned, the retainer rings 132 on the upwardly moving pins 122 will have reached the limit of their free upward travel and will impinge against the ledges 136 in the counterbores 134 of the lower plate 66, whereupon continued rotation of the central shaft 100 in the same direction will cause the retainer rings 132 to pick up the lower plate 66 and to lift it away from the adapter plate 24 of the top nozzle 20, thereby causing the expanded rims 74 to engage the lower ends 80 of the locking tubes 48 and to pull the latter forcefully from their locking positions within the inner sockets 46 formed by the guide-thimble end portions 36, as shown in Fig. 8. The central shaft 100 is rotated until the end of its mechanical travel is reached, at which point all of the locking tubes 48 are fully withdrawn from the inner sockets 46 of the top-nozzle attaching structure 40 and the top nozzle 20 is free to be lifted and removed from the guide thimbles 18, as seen from Fig. 4.

When it is desired to reinstall the re-usable locking tubes 48 in the top-nozzle attaching structure 40 after reconstruction of the fuel assembly 10 and remounting of the top nozzle 20 on the guide thimbles 18, the long-handled socket tool (not shown) for the hex head 178 of the central shaft 100 is used to rotate the latter so as to lower the two traveling plates 66, 82, together with the locking tubes 48 captured on the flexure tubes 68 (see Fig. 4), until the enlarged shoulders 76 on the flexure tubes are seated upon the adapter plate 24 and the locking tubes 48 thus are fully reinserted into their associated attaching structures 40. Rotation of the central shaft 100 is continued until the upper plate 82 abuts the lower plate 66 and the enlarged noses 88 on the actuating rods 84 are out of the flexure tubes 68 so that the rims 74 of the latter have resiliently contracted and moved from underneath the locking tubes 48.

Employing the socket tool (not shown) for the hex heads 174 of the shafts 150, the latter are now pushed down against the action of their springs 170 and are rotated to threadedly re-engage their lower end parts 162 in the hole 152 of the lower plate 66, thereby to secure the actuating rods 84 on the upper plate 82 in their withdrawn or ineffective positions with respect to the flexure tubes 68.

Now the long-handled socket tool for the hex head 178 of the central shaft 100 is utilized again to rotate the shaft 100 in the direction causing both plates 66, 82 to be raised and the flexure tubes 68 together with the actuating rods 84 thus to be withdrawn from the locking tubes 48. Finally, the tool (not shown) for the nuts 120 is used to actuate the wedge pins 116 in a manner releasing the fixture 12 from the top nozzle 20, whereupon the fixture 12 is removed from the reconstituted fuel assembly 10.

## Claims

1. A fixture for removing and inserting locking tubes respectively from and into locking positions within end portions of guide thimbles inserted in passageways formed through the adapter plate of a top nozzle of a reconstitutable nuclear fuel assembly, characterized by:

(a) a first traveling plate (66) having thereon flexure tubes (68) which project from the traveling plate in parallel with respect to each other and which are arrayed as said passageways (38) in the adapter plate(24), each of said flexure tubes (68) being insertable through one of the locking tubes (48) and resiliently expandable into gripping relationship therewith;

(b) a second traveling plate (82) disposed face-to-face with respect to said first traveling plate (66) and carrying actuating rods (84) which extend from said second traveling plate and extend movably through the respective flexure tubes (68) on the first traveling plate;

(c) aligning means (94) for guiding said first and second traveling plates (66,82) for movement away from and toward each other between two limit positions, each of said actuating rods (84) including a spreader portion (88) cooperable with the associated flexure tube (68) to effect resilient expansion thereof into said gripping relationship upon movement of the traveling plates (66,82) to one of said limit positions, and to permit collapse of the associated flexure tube out of said gripping relationship upon movement of the traveling plates to the other limit position;

(d) biasing means (96) urging said traveling plates (66,82) to move to said one limit position;

(e) interlocking means (150) cooperable with the traveling plates (66,82) and operable to move the latter to, and to releasably lock them in, said other limit position against the action of said biasing means (96); and

(f) mounting means (92) comprising a mounting plate (98) and a shaft (100) rotatably supported therefrom, said mounting plate (98) including means(112,114,116,120)formountingandstationarily positioning the fixture upon said top nozzle (20) in a manner such that the flexure tubes (68) and the actuating rods (84) therein are axially aligned with the respective passageways (38) of said adapter plate (24), and said shaft (100) being operatively connected to one (82) of the traveling plates (66,82) so as, when rotated in one direction, to move both traveling plates toward said adapter plate (24) and thereby insert the flexure tubes(68) together with the actuating rods (84) therein into the thimble-guide end portions (36) within the respective passageways (38), and, when rotated in the opposite direction, to move both traveling plates away from said adapter plate (24) a distance sufficient to completely withdraw the flexure tubes together with the actuating rods therein from said guide-thimble end portions (36) and passageways (38).

2. A fixture according to claim 1, characterized in that said means (112,114,116,120) for mounting and stationarily positioning the fixture upon the top nozzle include means (114,116,120) for releasably locking the fixture to the top nozzle.

3. A fixture according to claim 2, characterized in that the means (112,114,116,120) for mounting and stationarily positioning the fixture include legs (112) on the mounting plate (98) for seating the fixture upon said top nozzle, and said means (114,116,120) for releasably locking the fixture to the top nozzle comprise expandable split sleeves (114) fixedly supported in the respective legs (112) and extending therefrom so as to be insertable into corresponding bores (118) formed in the top nozzle, and wedge pins (116) which extend through the respective split sleeves (114) and each of which is axially movable in opposite directions for, respectively, expanding the associated split sleeve into, and allowing it to collapse out of, frictional locking engagement with the walls of the associated bore (118) in the top nozzle.

4. A fixture according to claim 1, 2 or 3, characterized in that said biasing means (96) are coil springs (148) disposed under compression between said first and second traveling plates (66,82).

5. A fixture according to claim 4, characterized in that each of said coil springs (148) is seated in a pair of sockets (144,146) formed in the respective traveling plates (66,82).

6. A fixture according to any one of the preceding claims, characterized in that said aligning means (94) are elongate pins (122) slideably supported from said mounting plate (98) and each having a pin portion (140) which extends slideably through aligned openings (124,126) in said traveling plates (66,82), each of said elongate pins (122) having thereon retaining means (132,138) disposed at opposite ends of said pin portion (140) to limit movement of the traveling plates (66,82) away from each other, thereby to define said one limit position, said other limit position being reached when the traveling plates move against each other.

7. A fixture according to any one of the preceding claims, characterized in that said shaft (100) has a pair of heads (178,180), one (178) of which is engageable with a tool rotating the shaft, and the other (180) of which is engageable with a tool for lifting and moving the fixture as a whole.

8. A fixture according to any one of the preceding claims, characterized in that said interlocking means (150) are connecting shafts each slideably and rotatably supported from said mounting plate (98) and having an end portion (166) which (a) slideably and rotatably extends through a hole (154) in one of the traveling plates (66,82), (b) has adjacent its free end an externally threaded end part (162) axially aligned with and threadedly engageable in a tapped hole (152) formed in the other traveling plate, and (c) has at its opposite end a radial shoulder (164) engaging said one traveling plate and drawing it up against said other traveling plate when said threaded end part (162) is threadedly engaged in said tapped hole (152).

9. A fixture according to claim 8, characterized in that each of said connecting shafts (150) is spring-loaded for limited movement thereof in an axial direction away from the associated tapped hole (152) and has a head portion (172,174) which is engageable with a tool for depressing the connecting shaft (150) against the action of the spring-load thereon and for rotating the connecting shaft into and from threaded engagement with the associated tapped hole (152).

10. A fixture according to any one of the preceding claims, characterized in that each of said flexure tubes (68) has an axially segmented sleeve portion (72) of such length as to extend through and slightly beyond the respective locking tube (48) when inserted therein, said segmented sleeve portion terminating in a segmented rim (74) having an outer diameter which is normally smaller than the inner diameter of said locking tube and is greater than said inner diameter when the flexure tube is resiliently expanded.

**Patentansprüche**

1. Eine Haltevorrichtung zum Abnehmen und Einsetzen von Verriegelungsrohren aus bzw. in Verriegelungsstellungen innerhalb von Endstücken von Führungsmuffen, die in Durchlässen der Adapterplatte einer Kopfdüse eines wiederherstellbaren Kernbrennsatzes eingesetzt sind, dadurch gekennzeichnet, dass

(a) eine erste Laufplatte (66) mit davon abstehenden Biegerohren (68) vorgesehen ist, die parallel zueinander und so in Reihe wie die Durchlässe (38) in der Adapterplatte (68) angeordnet sind, wobei jedes Biegerohr (68) durch eines der Verriegelungsrohre (48) steckbar und federnd in dieses eingreifend spreizbar ist;

(b) eine zweite Laufplatte (82) gegenüberliegend zu der ersten Laufplatte (68) angeordnet ist und abstehende Steuerstangen (84) aufweist, die bewegbar durch die entsprechenden Biegerohre (68) der ersten Laufplatte ragen;

(c) Ausrichtglieder (94) der ersten und zweiten Laufplatte (66, 82) zugeordnet sind und deren Bewegung zwischen zwei Grenzstellungen zueinander und weg voneinander führen, jede Steuerstange (84) mit Spreizteilen (88) versehen ist, die mit dem jeweils zugeordneten Biegerohr (68) zusammenwirken und dieses, entsprechend der Bewegung der Laufplatten (66, 82) in eine der Grenzstellungen, federnd in eine Greifstellung spreizen und die ferner bewirken, dass beim Bewegen der Laufplatten in die andere Grenzstellung das zugeordnete Biegerohr entspannt und aus der Greifstellung gelöst wird;

(d) Vorspannglieder (96) die Laufplatten (66, 82) in die eine der Grenzstellungen drücken;

(e) Sperrglieder (150) mit den Laufplatten (66, 82) zusammenwirken und diese gegen die Wirkung der Vorspannglieder (96) in die andere Grenzstellung bewegen und in dieser lösbar sperren; und

(f) Befestigungsmittel (92) bestehend aus einer Befestigungsplatte (98) und einer daran drehbar angeordneten Welle (100) vorgesehen sind, die Befestigungsplatte (98) Mittel (112, 114, 116, 120) aufweist, die die Haltevorrichtung auf der Kopfdüse (20) festlegen und stationär in Lage bringen, derart, dass die Biegerohre (68) und die Steuerstangen (84) mit den entsprechenden Durchlässen in der Adapterplatte (24) axial ausgerichtet sind, wobei die Welle (100) arbeitsmässig mit einer (82) der Laufplatten (66, 82) verbunden ist, derart, dass bei deren Drehung in eine Richtung beide Laufplatten gegen die Adapterplatte (24) bewegt werden und dabei die Biegerohre (68) zusammen mit den darin eingesetzten Steuerstangen (84) in die Endstücke der Führungsmuffen (36) innerhalb der entsprechenden Durchlässe eingesetzt werden, und bei Drehung in die andere Richtung beide Laufplatten von der Adapterplatte (24) so weit weg bewegt werden, dass die Biegerohre zusammen mit den Steuerstangen aus den Endstücken der Führungsmuffen (36) und den Durchlässen (38) vollständig herausgezogen werden.

2. Haltevorrichtung nach Anspruch 1, dadurch gekennzeichnet, dass die Mittel (112, 114, 116, 120) zum Festlegen und stationären Inlagebringen der Haltevorrichtung auf der Kopfdüse Einrichtungen (114, 116, 120) zum lösbaren Verriegeln der Haltevorrichtung auf der Kopfdüse aufweisen.

3. Haltevorrichtung nach Anspruch 2, dadurch gekennzeichnet, dass die Mittel (112, 114, 116, 120) zum Festlegen und stationären Inlagebringen der Haltevorrichtung, auf der Befestigungsplatte (98) angeordnete Stützbeine (112) aufweisen, um die Haltevorrichtung auf die Kopfdüse zu setzen, und die Mittel (114, 116, 120) zum lösbaren Verriegeln der Haltevorrichtung auf der Kopfdüse spreizbare Spannhülsen (114) aufweisen, die fest in den entsprechenden Stützbeinen (112) gehalten sind und von diesen abstehen, derart, dass sie in entsprechende Bohrungen (118) in der Kopfdüse einsetzbar sind, und Keilstifte (116) durch die entsprechenden Spannhülsen (114) gesteckt sind, wobei jeder Keilstift in entgegengesetzten Richtungen bewegbar ist, um die zugehörige Spannhülse zu spreizen bzw. zu entlasten und dabei die Spannhülsen mit den Wänden der zugeordneten Bohrung (118) in der Kopfdüse in reibende Sperrberührung zu bringen, bzw. aus dieser Sperrung zu lösen.

4. Haltevorrichtung nach Anspruch 1, 2 oder 3, dadurch gekennzeichnet, dass die Vorspannglieder (96) aus Schraubenfedern (148) bestehen, die zwischen der ersten und der zweiten Laufplatte (66, 82) gespannt sind.

5. Haltevorrichtung nach Anspruch 4, dadurch gekennzeichnet, dass jede Schraubenfeder (148) in einem in der entsprechenden Laufplatte (66, 82) geformten Sockelpaar (144, 146) eingesetzt ist.

6. Haltevorrichtung nach einem der vorhergehenden Ansprüche, dadurch gekennzeichnet, dass die Ausrichtglieder (94) aus länglichen Stiften (122) bestehen, die gleitend in der Befestigungsplatte (98) angeordnet sind, wobei ein Stiftteil (140) durch fluchtende Öffnungen (124, 126) in den Laufplatten (66, 82) gleitend geführt ist und jeder Stift (122) Haltemittel (132, 138) aufweist, die an entgegengesetzten Enden des Stiftteiles (140) angeordnet sind, um die gegenläufige Bewegung der Laufplatten (66, 82) zu begrenzen und dabei die eine Grenzstellung zu bestimmen, wobei die andere Grenzstellung erreicht wird, wenn die Laufplatten sich zueinander bewegen.

7. Haltevorrichtung nach einem der vorhergehenden Ansprüche, dadurch gekennzeichnet, dass die Welle (100) ein Kopfpaar (178, 180) aufweist, wobei ein Kopf (178) mit einem Werkzeug in Eingriff bringbar ist, um die Welle zu drehen und der andere Kopf (180) einem Werkzeug zugeordnet ist, das zum Anheben und Bewegen der Haltevorrichtung als Ganzes dient.

8. Haltevorrichtung nach einem der vorhergehenden Ansprüche, dadurch gekennzeichnet, dass die Sperrglieder (150) aus Transmissionswellen bestehen, von denen jede verschiebbar und drehbar von der Befestigungsplatte (98) getragen ist und ein Endstück (166) aufweist, das

(a) verschiebbar und drehbar durch ein Loch (154) in einer der Laufplatten (66, 82) ragt,

(b) angrenzend an einem freien Ende ein mit Aussengewinde versehener Endabschnitt (162) vorgesehen ist, der mit einem in der anderen Laufplatte angeordneten Gewinde-Sackloch (152) ausgerichtet und in dieses einschraubbar ist, und

(c) an seinem entgegengesetzten Ende eine radiale Schulter (164) aufweist, die eine der Laufplatten berührt und diese gegen die andere Laufplatte zieht, wenn das Gewinde-Endstück (162) in das Sackloch (152 eingeschraubt wird.

9. Haltevorrichtung nach Anspruch 8, dadurch gekennzeichnet, dass jede Transmissionswelle (150) federbelastet ist, um deren Bewegung in axialer Richtung weg vom zugeordneten Sackloch (152) zu begrenzen, und ferner ein Kopfstück (172, 174) aufweist, das einem Werkzeug zugeordnet ist, welches die Transmissionswelle (150) gegen die Wirkung der Federspannung niederdrückt und die Transmissionswelle in den und aus dem Gewindeeingriff mit dem zugeordneten Sackloch (152) dreht.

10. Haltevorrichtung nach einem der vorhergehenden Ansprüche, dadurch gekennzeichnet, dass jedes Biegerohr (68) einen axial segmentierten Hülsenabschnitt (72) aufweist, der so lang ist, dass er nach Einsetzen durch und etwas über das entsprechende Verriegelungsrohr (48) vorstehend ragt, der segmentierte Hülsenabschnitt in einem segmentierten Rand (74) endet, dessen Aussendurchmesser normalerweise kleiner ist als der Innendurchmesser des Verriegelungsrohres, aber grösser ist als dieser Innendurchmesser, wenn das Biegerohr federnd gespreizt ist.

## Revendications

1. Appareillage pour établir et supprimer la position de blocage de tubes de blocage à l'intérieur de parties terminales de chaussettes de guidage introduites dans des passages ménagés à travers la plaque adaptatrice de l'embout supérieur d'un assemblage combustible nucléaire reconstituable, caractérisé par:

(a) une première plaque mobile (66) sur laquelle se trouvent des tubes flexibles (68) qui dépassent de la plaque mobile parallèlement les uns aux autres et dont l'ensemble forme lesdits passages (38) dans la plaque adaptatrice (24), chacun desdits tubes flexibles (68) pouvant être inséré à travers l'un des tubes de blocage (48) et pouvant se dilater de manière élastique jusqu'à la réalisation d'un blocage mutuel avec celui-ci;

(b) une seconde plaque mobile (82) disposée face à face par rapport à ladite première plaque mobile (66) et portant des barres de manœuvre (84) qui s'étendent depuis ladite seconde plaque mobile et s'étendent de manière déplaçable à travers les tubes flexibles (68) correspondant de la première plaque mobile;

(c) des moyens d'alignement (94) pour guider lesdites première et seconde plaques mobiles (66, 82) afin qu'elles s'écartent et se rapprochent l'une de l'autre entre deux positions limites, chacune desdites barres de manœuvre comportant une partie formant écarteur (88) pouvant coopérer avec le tube flexible correspondant (68) pour réaliser une dilatation élastique de celui-ci jusqu'à son blocage mutuel précité lorsque les plaques mobiles (66, 82) se déplacent jusqu'à une première desdites positions limites, et pour permettre la contraction du tube flexible de façon qu'il supprime ledit blocage mutuel lorsque les plaques mobiles atteignent la seconde position limite;

(d) des moyens de sollicitation (96) poussant lesdites plaques mobiles (66, 82) pour qu'elles se déplacent jusqu'à ladite première position limite;

(e) des moyens de verrouillage (150) pouvant coopérer avec les plaques mobiles (66, 82) et servant à déplacer ces dernières jusqu'à ladite seconde position limite, et à les y verrouiller d'une manière desserrable, à l'encontre de l'action desdits moyens de sollicitation (96); et

(f) un moyen de montage (92) comprenant une plaque de montage (98) et un arbre (100) supporté de manière rotative depuis celle-ci, ladite plaque de montage (98) comportant des moyens (112, 114, 116, 120) pour monter et mettre en place d'une manière fixe l'appareillage sur ledit embout supérieur (20) de façon que les tubes flexibles (68) et les barres de manœuvre (84) présentes dans ceux-ci soient alignés axialement avec les passages correspondants (38) de ladite plaque adaptatrice (24), et ledit arbre (100) coopérant avec l'une (82) des plaques mobiles (66, 82) de façon que, lorsqu'il tourne dans un premier sens, il fasse se rapprocher de ladite plaque adaptatrice (24) les deux plaques mobiles et, de ce fait, il introduise les tubes flexibles (68), avec les barres de manœuvre (84) qui s'y trouvent, dans les parties terminales (36) des chaussettes de guidage insérées dans les passages (38) correspondants, et que, lorsqu'il tourne en sens inverse, il éloigne les deux plaques mobiles, par rapport à ladite plaque adaptatrice, (24) d'une distance suffisante pour retirer complètement les tubes flexibles, avec les barres de manœuvre dans ceux-ci, des parties terminales (36) des chaussettes ainsi que des passages (38).

2. Appareillage selon la revendication 1, caractérisé en ce que lesdits moyens (112, 114, 116, 120) pour monter et mettre en place de manière fixe l'appareillage sur l'embout supérieur comprennent des moyens (114, 116, 120) pour accrocher de manière libérale l'appareillage à l'embout supérieur.

3. Appareillage selon la revendication 2, caractérisé en ce que les moyens (112, 114, 116, 120) pour monter et mettre en place de manière fixe l'appareillage comprennent des pieds (112) sur la plaque de montage (58) pour faire reposer l'appareillage sur ledit embout supérieur, et lesdits moyens (114, 116, 120) pour verrouiller de manière libérable l'appareillage sur l'embout supérieur comprennent des manchons fendus élargissables (114) supportés de manière fixe par les pieds (112) correspondants et s'étendant depuis ceux-ci de façon à pouvoir être introduits dans des alésages correspondants (118) formés dans l'embout supérieur, et des goujons formant coins (116) qui s'étendent à travers les manchons fendus (114) correspondants et dont chacun est déplaçable axialement dans des directions opposées, pour dilater le manchon fendu correspondant et permettre à celui-ci de se contracter, respectivement pour établir et supprimer un contact de blocage par frottement avec les parois de l'alésage (118) correspondant de l'embout supérieur.

4. Appareillage selon la revendication 1, 2 ou 3, caractérisé en ce que lesdits moyens de sollicitation (96) sont des ressorts hélicoïdaux (148) disposés, sous compression, entre lesdites première et seconde plaques mobiles (66, 82).

5. Appareillage selon la revendication 4, caractérisé en ce que chacun desdits ressorts hélicoïdaux (148) est en appui dans une paire de cavités (144, 146) formées dans les plaques mobiles (66, 82) correspondantes.

6. Appareillage selon l'une quelconque des revendications précédentes, caractérisé en ce que lesdits moyens d'alignement (94) sont des axes allongés (122) supportés de manière coulisssante par ladite plaque de montage (98) et ayant chacun une partie (140) d'axe qui s'étend d'une manière coulissante à travers des ouvertures alignés (124, 126) desdites plaques mobiles (66, 82), sur chacun desdits axes allongés (122) se trouvant des moyens de retenue (132, 138) disposés aux extrémités opposées de ladite partie (140) d'axe pour limiter l'éloignement des plaques mobiles (66, 82) l'une par rapport à l'autre, afin de définir de ce fait ladite première position limite, ladite seconde position limite étant atteinte quand les plaques mobiles viennent l'une contre l'autre.

7. Appareillage selon l'une quelconque des revendications précédentes, caractérisé en ce que ledit arbre (100) a une paire de têtes (178, 180) dont l'une (178) peut coopérer avec un dispositif pour faire tourner l'arbre, et l'autre (180) peut coopérer avec un dispositif pour soulever et déplacer l'ensemble de l'appareillage.

8. Appareillage selon l'une quelconque des revendications précédentes, caractérisé en ce que lesdits moyens de verrouillage (150) sont des arbres de liaison supportés chacun, de façon à pouvoir coulisser et tourner, depuis ladite plaque de montage (166) et ayant une partie terminale (166) qui (a) s'étend d'une manière coulissante et rotative à travers un trou (154) situé dans une première des plaques mobiles (66, 82), (b), a, d'une façon contiguë à son extrémité libre, une partie terminale (162) à filetage extérieur, alignée axialement avec un trou taraudé (152) formé dans la seconde plaque mobile et pouvant se visser dans ledit trou, et (c), a, à son extrémité opposée, un épaulement radial (164) au contact de ladite première plaque mobile et la tirant vers le haut contre ladite seconde plaque mobile quand ladite partie terminale filetée (162) est vissée dans ledit trou taraudé (152).

9. Appareillage selon la revendication 8, caractérisé en ce que chacun desdits arbres de liaison (150) est soumis à l'action d'un ressort servant à limiter l'éloignement de celui-ci, dans une direction axiale, par rapport au trou taraudé (152) correspondant, et a une partie formant tête (172, 174) pouvant coopérer avec un outil pour abaisser l'arbre de liaison (150) à l'encontre de l'action de la force de ressort à laquelle il est soumis et pour faire tourner l'arbre de liaison afin de le visser dans le trou taraudé (152) correspondant et de le dévisser pour le sortir dudit trou.

10. Appareillage selon l'une quelconque des revendications précédentes, caractérisé en ce que chacun desdits tubes flexibles (68) a une partie formant manchon (72) à segmentation axiale, d'une longueur telle qu'elle s'étend à travers et légèrement au-delà du tube de blocage (48) correspondant quand elle est introduite dans celui-ci, ladite partie formant manchon segmenté se terminant par un bord segmenté (74) dont le diamètre extérieur est normalement inférieur au diamètre intérieur dudit tube de blocage et supérieur audit diamètre intérieur lorsque le tube flexible est dilaté d'une manière élastique.

EP 0 223 342 B1

FIG. I

FIG. 2

## FIG. 3

EP 0 223 342 B1

FIG. 4

FIG.5    FIG.6    FIG.7    FIG.8

EP 0 223 342 B1